Europäisches Patentamt

European Patent Office

Office européen des brevets

(19)

(11) Publication number: **0 102 196**

**A1**

(12) # EUROPEAN PATENT APPLICATION

(21) Application number: **83304404.3**

(22) Date of filing: **29.07.83**

(51) Int. Cl.³: **C 09 D 5/40**
**C 25 D 13/06**

(30) Priority: **13.08.82 GB 8223304**

(43) Date of publication of application:
**07.03.84 Bulletin 84/10**

(84) Designated Contracting States:
**DE FR GB NL SE**

(71) Applicant: **IMPERIAL CHEMICAL INDUSTRIES PLC**
**Imperial Chemical House Millbank**
**London SW1P 3JF(GB)**

(72) Inventor: **Palluel, Auguste Louis Lucien**
**10, Bolton Crescent**
**Windsor Berkshire(GB)**

(72) Inventor: **Redman, Richard Paul**
**10, Earley Hill Road**
**Reading Berkshire(GB)**

(72) Inventor: **Lyons, John Stanley**
**Unit 4 81 Severn Street**
**Box Hill North Victoria 3129(AU)**

(74) Representative: **Kerr, Michael Arthur et al,**
**Imperial Chemical Industries PLC Legal Department :**
**Patents Po Box 6**
**Welwyn Garden City Herts, AL7 1HD(GB)**

(54) **Coating compositions used in electrodeposition process.**

(57) A cationically stabilised dispersion of polymer particles in an aqueous medium, suitable for use in a coating composition to be applied to a cathodic substrate by electro-deposition and thereby produce coatings which are thicker than conventional, has particles of defined maximum ionic charge and of coalescence temperature higher than the coating bath and has aqueous medium of defined maximum conductivity.

EP 0 102 196 A1

Croydon Printing Company Ltd

Pr 3024 4 EP 0102196

COATING COMPOSITIONS USED IN ELECTRODEPOSITION PROCESS

This invention relates to aqueous polymer dispersions which are suitable for use in coating compositions; more particularly to cationically stabilised aqueous polymer dispersions useful in coating compositions which can be applied to a substrate by electrodeposition and to a process of electrodeposition using the said coating compositions in order to obtain a relatively thick coating on a substrate.

It is well established to apply a coating to a conductive substrate by immersing the substrate in a coating composition comprising a dispersion of ionically stabilised polymer particles and then passing an electric current between the substrate as one electrode and a counter electrode until a desired coating is obtained. Usually it has been convenient, particularly in commercial practice, to obtain a coating on the substrate which is self-regulating in thickness, the self-regulation being due to the insulating nature of the ionised polymer particles when they have discharged at the substrate electrode and coalesced into a relatively thin non-porous electrically insulating film. It is an advantage in such a process when the coalescence of the particles occurs immediately after or concurrently with deposition so that an insulating film is very quickly produced. In these circumstances, given a suitable conductivity in the aqueous phase, a satisfactory coating is readily produced on surfaces of the substrate which are relatively remote from the counter electrode, i.e. the throwing power of the coating composition is said to be good and the total coating is relatively even in thickness.

Many of the polymer dispersions hitherto found to be suitable in coating compositions applied by electro-deposition give relatively thin coating films, for example in the range 10-20 microns, particularly when a high throwing power is required. The thickness of coating achieved on a substrate when using these dispersions may be increased when there is also present in the composition a solvent or plasticiser which softens the coalesced coating film so as to render it more porous to current-conducting ionised particles, more particles then being discharged over a given area of substrate. However, for a given conductivity in the aqueous phase, the permanent softening of the film in this way causes the throwing power of the coating composition to be reduced. It is also known that the coating thickness may be increased by increasing the voltage or by increasing the time or temperature of application. In general, the thickness of coatings produced from conventional compositions useful for electrodeposition, and made from self-dispersible polymers with an ionic content above 20 meq/100g and a film-forming temperature below room temperature, even when modified with additives, does not exceed 35 microns.

More recently it has been desired to obtain a coating by electrodeposition which is thicker than that which has been achieved hitherto, so that, for example, imperfections on the surface of the substrate are obliterated. This coating would thus perform two functions; (a) as a primer for the metal surface, and (b) as a "surfacer" to provide a smooth surface to which a top coat can be applied.  In one approach to the problem there has been used a different type of coating composition which comprises a dispersion of relatively large  and relatively hard particles of uncharged polymer, for example powder particles, which do not themselves coalesce on the substrate during the deposition process but only coalesce to form a film when they are subsequently heated, such as in a stoving operation.  In order to stabilise the polymer particles and ensure their electrodeposition it has been necessary to employ additionally in the coating composition a minor proportion of an ionically stabilised polymer which is of the general type already discussed above. However, although the presence of the relatively hard particles ensures that a thicker coating is produced, for example up to 60 microns in thickness, the coating remains relatively porous; the throwing power,of the coating composition is poor for a given conductivity of the aqueous phase; and the film is not self-regulating with regard to its final thickness.

We have now found that a relatively thick coating film, for example in the range 25-60 microns, can be obtained by electrodeposition on a cathodic substrate, whilst retaining satisfactory throwing power,if there is employed a coating composition which comprises a closely defined cationically stabilised dispersion of polymer particles in an aqueous medium. The nature of the particles in this composition is such that after deposition they form an insulating film by coalescence on the substrate electrode only after the elapse of a significant period of time. This period of time is to be sufficient to permit the continued discharge of ions at the substrate electrode only until a film of required thickness is built up.

According to the present invention we provide a cationically stabilised dispersion of polymer particles in an aqueous medium, suitable for use in a coating composition to be applied from a coating bath to a cathodic substrate by electrodeposition and thereby produce a coating at least 25 microns in thickness, wherein

(i)    the polymer particles have an ionic charge not greater than 50 meq/100g of polymer;

(ii)    the polymer particles considered as a whole have a temperature of coalescence (Tc) as herein defined of at least $10^{\circ}C$ above the temperature of the coating bath $(T_b)$;

and (iii)    the aqueous medium has a conductivity of not greater than 1000 microsiemens.

The invention also provides a coating composition comprising a cationically stabilised dispersion of polymer particles as defined above to be applied to a cathodic substrate by electrodeposition.

The invention further provides a process of coating a cathodic substrate by electrodeposition using a coating composition comprising a cationically stabilised dispersion of polymer particles as defined above, the coalescence of the polymer particles on the electrode to form an insulating film being delayed for a sufficient period of time that the film is at least 25 microns in thickness.

The polymer particles may comprise one or more film-forming polymers and may be stabilised, or at least partially stabilised, by a distinct non-polymeric cationic surfactant associated with the particles or by a distinct polymeric cationic surfactant associated with the particles. Alternatively at least part of, or substantially all of, the stabilisation of the particles may be provided by cationic groups which are present in one or more film-forming polymers contained in the particle.

In order to achieve a thick coating according to the invention we find that the stabilising charge present on the individual particles should be as low as possible consistent with the stability of the bulk of dispersed polymer particles in the aqueous coating medium. Under these circumstances there is achieved the maximum extent of deposition of polymer before coalescence of the polymer and insulation of the substrate occurs. Preferably the particles have a charge in the range 2-50 meq/100g polymer, more preferably less than 30 meq/100g and still more preferably in the range 5-20 meq/100g polymer. The charge on the polymer particles may be varied, for example, by changes in the proportion of ionisable cationic groups present in or associated with the particle or by changes in the extent of ionisation due to the presence of a counter-ion.

The temperature of coalescence (Tc) of the polymer particles considered as a whole is chosen in relation to the prevailing conditions so that coalescence of the particles deposited on, and therefore electrical insulation of, the cathode occurs only when substantial deposition has occurred, i.e. such as will lead to a final coating film of thickness greater than 25 microns, usually greater than 35 microns. Coatings up to 100 microns and higher may be achieved in this way, but normally the thickness is in the range 35-70 microns. Preferably the temperature of coalescence (Tc) of the polymer particles is at least 20°C above the temperature of application of the coating composition to the substrate by electrodeposition, i.e. the temperature of the coating bath (Tb).

The determination of the temperature of coalescence (Tc) of the polymer particles considered as a whole, as it is to be understood in this invention, and the selection of polymer particles useful in this invention will now be described.

A number of samples of coating composition (suitable to cover in, say $5^{\circ}$, intervals a range of temperature believed to include the temperature of coalescence (Tc), of the polymer particles considered as a whole) each containing 50g of polymer particles, and having the same essential characteristics, e.g. solids content, pH, as the composition proposed to be electrodeposited, were each heated to a temperature within the decided range, the temperature of each sample being $5^{\circ}$ different from that of the next sample. Sufficient 0.5N sodium hydroxide solution pre-heated to the same temperature as the sample was added to each sample to produce immediate colloidal instability. The sufficient amount of 0.5N sodium hydroxide had been determined by titrating a sample of the composition at room temperature with sodium hydroxide until it thickened uniformly to indicate the onset of coagulation.

The temperature or temperature span over which there was a transition in the appearance of the coagulated polymer from a gritty, particulate, rigid material to an essentially coalesced lump which was pliable and elastic (for example resembling a piece of chewing gum), was determined. The assessment of the state of the coagulated polymer was made during the period 30 to 60 seconds after addition of the base. The transition in behaviour occurred usually over a temperature span of $5^{\circ}$ and once this was identified the test was repeated at $1^{\circ}$ intervals over that, or any larger span.

From the practical point of view, as the temperature rises approaching the temperature of coalescence the coagulated polymer tends to form larger lumps, or perhaps one lump, which when dug into with a spatula and then drawn, breaks or tears apart showing no elasticity. This is to be considered below the coalescing temperature. The coalescing temperature is understood to be the point when such an operation with a spatula causes elastic deformation of the coagulant and where the elastic deformation occurs over a distance of at least 1 cm. The useful dispersions and compositions according to the invention are those containing polymer particles which have the latter property at a temperature at least $10^{\circ}C$ higher and preferably at least $20^{\circ}C$ higher than the temperature of the coating bath (Tb).

The present invention relies at least in part upon the elevation of the temperature of the cathodic substrate to be coated above that of the coating bath from which electrodeposition takes place, due to the electrical heating of the substrate. Thus after a significant delay the non-coalesced particles at temperature Tb only coalesce when they reach temperature Tc at the surface of the cathodic substrate. Other factors such as electro-osmosis may also contribute to the phenomena which occur at the surface of the substrate.

The thickness of coating which is obtained on a substrate is thus determined by the extent to which deposition is allowed to continue before coalescence and the resulting electrical insulation occurs. The thickness of a coating can be varied, therefore, by changing the Tc of the polymer particle as a whole and/or by changing the temperature differential between the coating bath and the substrate surface. These changes in polymer properties and application techniques will be readily carried out by those skilled in the art once they are in possession of the present invention.

Preferably the bath temperature is in the range 20-40$^{\circ}$C, more preferably in the range 25-30$^{\circ}$C. But clearly the precise temperature will depend upon the process conditions and may be higher or lower than the specified ranges.

Since the present compositions are self-regulating in thickness the time of deposition is not critical, but preferably polarisation occurs within 10-60 seconds and the total deposition time may be up to 5 minutes, preferably 1-2 minutes.

Preferably the compositions of this invention contain only a very low level of coalescing solvent, if any at all.

Suitable polymers of which the polymer particles may be comprised include all those broad types of polymer known to be useful for electrodeposition at a cathode provided that the stated criteria are met. These polymers include epoxy resins and modified epoxy resins, especially those derived from epichlorhydrin and diphenylolpropane, alkyd resins, addition polymers and polyurethane resins. They may be associated with crosslinking agents, for example polyisocyanates P/F, U/F and M/F resins. Specific types of polymer dispersions known to be useful, when the stated criteria are met, include those cationically stabilised dispersions described in European Patent Publication No. 69582. These polymer dispersions comprise particles which comprise:

a. a polymeric modifier comprising reactive groups,

  b.  an addition polymer comprising reactive
groups of the same or similar type to
the reactive groups in the polymeric
modifier, and

  c.  a crosslinking agent which comprises reactive
groups complementary to the reactive groups
present in (a) and (b).

    Dispersions of this type can be prepared by a
process in which there is prepared in an aqueous medium
a dispersion of cationically stabilised particles each
of which particles comprises:

    (i)  a preformed polymeric modifier
comprising reactive groups,

    (ii) polymerisable αB-ethylenically
unsaturated monomer or monomers, at
least one monomer comprising a reactive
group which is the same as or similar
to those reactive groups in the preformed
polymer, said preformed polymer being
dissolved in said monomer or monomers,
    and

    (iii) a cross-linking agent which comprises
reactive groups complementary to the
reactive groups in (i) and (ii);

and the polymerisable monomer or monomers is/are polymerised
to produce _in situ_ an addition polymer.

    Other polymers having the required criteria
will be readily selected by those skilled in the art.

    Preferably the coating compositions for use in
a cathodic electrodeposition process comprise 5-50% and more preferably 10-30% by weight of the polymer based on the weight of the composition. In general, for a given coating bath temperature, and other factors being equal, thicker coatings are obtained at lower polymer concentrations.

We have also found that the conductivity of the aqueous medium in the polymer dispersion, and a coating composition derived therefrom, is an important factor in determining the thickness of a deposited coating and for relatively thick coatings according to this invention the conductivity should be not greater than 1000 microsiemens. Preferably it is in the range 100-1000 microsiemens, more preferably in the range 150-500 microsiemens.

The conductivity of the aqueous medium, which is determined by the ionic strength, may be affected by such factors as the concentration of polymer particles in the dispersion and the extent to which ions are removed from the medium, for example by dialysis or ultrafiltration. Thus the thickness of the deposited coating is greater at lower conductivities, whether this is due to a lower concentration of ionised polymer or to the use of dialysis or ultrafiltration.

The coating compositions of this invention may contain any of the conventional coating additives such as pigment, filler and extender.

The invention is illustrated by the following Example in which parts and percentages are by weight.

EXAMPLE

This Example describes the preparation of an aqueous dispersion of particles containing preformed, modified epoxy resin blended with an addition copolymer formed in situ, and its use in a cathodic electro-deposition process in accordance with this invention.

450 parts epoxy resin (commercially available as 'Epikote' 1001; Epikote is a Registered Trade Mark) was modified by melting and blending with 70 parts of phenol to which a charge of 26 parts of diethanolamine was added at $100^{o}$C. The batch temperature was raised to $150^{o}$C and maintained for 2 hours by which time the epoxide value of the batch had dropped to zero. The modified epoxy resin was cooled to $100^{o}$C and thinned in 344 parts of methyl methacrylate monomer.

65 parts of this resin solution containing 40 parts of the modified epoxy resin and 25 parts of methyl methacrylate were blended with a further 5 parts of methyl methacrylate, 15 parts of butyl acrylate, 15 parts of hydroxyethyl methacrylate, 25 parts of a blocked isocyanate crosslinking agent, 1 part of cumene hydroperoxide, 0.5 parts octyl mercaptan and 1.1 parts of glacial acetic acid. This solution was emulsified in 50 parts of demineralised water under high shear using a Silverson emulsifier and thinned down with a further 190 parts of demineralised water. A solution of 0.6 parts ascorbic acid and 0.3 parts ferrous sulphate in 20 parts of demineralised water was added to the emulsion with gentle mixing to initiate polymerisation of the dispersed acrylic monomer, there being a subsequent exotherm from 20° to 48°C.

On completion of polymerisation the 30% nonvolatile solids dispersion thus obtained had a pH of 4.5. The average polymer particle size was 0.3 microns, the conductivity of the aqueous phase was 720 $\mu5cm^{-1}$ at 25°, and the polymer particles had an ionic charge of less than 50 meq/100g of polymer.

The temperature of coalescence (Tc) of the whole polymer particles was determined as earlier described. A 50g sample at room temperature (20°) was titrated with 0.5N sodium hydroxide solution in water with continuous gentle mixing applied during the addition, until the coagulating dispersion had thickened completely. The amount of base required to do this was 6.0 ml, and the sample at this point was gritty and particulate and clearly in a coagulated condition without showing any degree of coalescence. Another sample of 50g of the same dispersion heated to 40°C, and maintained at this temperature in a constant temperature bath was coagulated by the addition of 6.0 ml of sodium hydroxide solution also heated to 40°C, where the addition was carried out in approximately five seconds and only gentle mixing was provided during and after the addition. Examination of the sample in the period between 30 and 60 seconds after the addition was started, showed the polymer coagulant to be in essentially one lump and that the lump tore apart rather than displaying elastic properties and was therefore classed as being below the coalescence temperature.

Another sample tested at 50°C by coagulating with pre-heated base and maintaining the temperature as before gave a lump of polymer which was clearly elastic, resembling a soft chewing gum-like mass, and was therefore classed as being above the coalescence temperature. A sample tested in the same way, at $42^{\circ}C$ gave an inelastic mass, quite like the test result at $40^{\circ}C$. However, a sample tested at $44^{\circ}C$ showed both elastic and inelastic behaviour within the specified period, indicating at least the onset of the required behaviour as defined for the coalescence temperature. A further test at $45^{\circ}C$ gave predominantly elastic behaviour, consistent with having exceeded the coalescence temperature. The temperature of coalescence (Tc) at 30% solids was therefore taken to be $44^{\circ}C$.

Using the 30% solids dispersion as an electrolytic medium in a cylindrical electrodeposition bath in which a phosphated steel panel was used as cathode (5cm x 10cm) and a stainless steel panel (5cm x 10cm) as anode with 5cm separation between the electrodes, application of a potential difference of 200 volts for 60 seconds produced a coalesced, polarised and adherent deposit on the cathode. After removal from the bath, rinsing and blow drying the deposit, and curing by stoving for 30 minutes at $150^{\circ}C$ produced a smooth, glossy and adherent film. With an electrodeposition bath temperature of $20^{\circ}C$ a film thick- ness of 60 microns was obtained. At bath temperatures below $20^{\circ}C$ thicker films were obtained and at bath temp- eratures above $20^{\circ}C$ thinner films were obtained.

The conditions under which films of 60 microns or more were obtained were therefore when the bath temper- ature was $24^{\circ}$ or more below the coalescence temperature.

The 30% solids dispersion was diluted to 10% solids by the addition of demineralised water, giving a pH of 4.5 and conductivity of 283 $\mu 5cm^{-1}$ at $25^{\circ}C$. The polymer particles had an ionic charge of less than 50meq/ 100g of polymer. Subjecting this dispersion to the same procedure for determining the coalescence temperature (Tc) a 50g sample required 2.4 ml 0.5N sodium hydroxide to thicken to a friable putty-like consistency. Another 50g sample heated to 45$^{o}$C and maintained in a constant temperature bath was coagulated with 2.4 ml of sodium hydroxide solution, also at 45$^{o}$C, where the addition was carried out in approximately five seconds and only gentle mixing was provided during and after the addition. Examination of the sample in the 30 to 60 second period after the addition was started showed that virtually all the polymer had coagulated in one mass which was inelastic and tore apart and therefore below the coalescence temperature.

Tested in the same manner at 47$^{o}$C, a similar inelastic coagulant was formed, but at 49$^{o}$C the coagulant was predominantly elastic and therefore at or above the coalescence temperature. The coalescence temperature (Tc) at 10% solids was taken to be 48$^{o}$C. Using this dispersion as the electrolytic medium in an electrodeposition bath, adherent, polarised and coalesced deposits were obtained on the cathode which stoved to give smooth, glossy, adherent films. At a given bath temperature thicker films were obtained at this concentration (10% solids) than with the previous concentration (30% solids), and the bath temperature required to obtain 60 microns was 26$^{o}$C in this case. Again at temperatures below 26$^{o}$C thicker films were obtained and at temperatures above 26$^{o}$C thinner films were obtained.

The conditions under which films of 60 microns or more were obtained from the 10% solids electrodeposition bath were therefore when the bath temperature was 22$^{o}$C or more below the coalescence temperature (Tc).

0102196

PV.32414

CLAIMS :-

1.      A cationically stabilised dispersion of polymer
        particles in an aqueous medium, suitable for use in
        a coating composition to be applied to a cathodic
        substrate by electrodeposition and thereby produce
        a coating at least 25 microns in thickness, wherein
        (i)   the polymer particles have an ionic charge not
              greater than 50 meq/100g. of polymer
        (ii)  the polymer particles as a whole have a temperature
              of coalescence (Tc) as herein defined of at least
              $10^{o}C$ above the temperature of the coating bath (Tb)
    and (iii) the aqueous medium has a conductivity of not
              greater than 1000 microsiemens.

2.      A cationically stabilised dispersion according to
        claim 1 wherein the polymer particles as a whole have a
        temperature of coalescence (Tc) at least $20^{o}C$ above
        the temperature of the coating bath (Tb)

3.      A cationically stabilised dispersion according to
        claim 1 or claim 2 wherein the polymer particles have
        an ionic charge in the range 5-20 meq/100g. of polymer

4.      A cationically stabilised dispersion according to any
        one of claims 1-3 wherein the bath temperature is in
        the range $20-40^{o}C$

5.      A coating composition comprising a cationically
        stabilised dispersion according to any one of claims
        1 to 4, there being present 5-50% by weight of polymer

6.      A process of coating a cathodic substrate by electro-
        deposition using a coating composition according to
        claim 5, the coalescence of polymer particles on the
        electrode being delayed for a sufficient period of time
        that the film is at least 25 microns thick.

0102196

Application number

EP 83 30 4404

**European Patent Office**

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-4 335 028 (VINCENT W. TING) <br> * Abstract; column 19, lines 38-39; column 23, table 2; column 24, table 3 * | | C 09 D 5/40 <br> C 25 D 13/06 |
| A | US-A-3 926 760 (JAMES S. ALLEN) <br><br> * Abstract; column 11, 1st paragraph; column 13, lines 20-21 * | | |
| A | CHEMICAL ABSTRACTS, vol. 81, 1974, page 104, no. 65312v, Columbus, Ohio, US <br> A.P. MOROZ et al.: "Mechanism of coatings formation by the electrodepostion of polymers from aqueous dispersions" & OKRASKA ELEKTROOSAZHDENIEM VODORAZBAVLYAEMYKH LAKOKRASOCH. MATER. 1972, 33-40 * Whole abstract * | | |

TECHNICAL FIELDS SEARCHED (Int. Cl. ³)

C 09 D

The present search report has been drawn up for all claims

| Place of search <br> THE HAGUE | Date of completion of the search <br> 18-11-1983 | Examiner <br> GIRARD Y.A. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82